Europäisches Patentamt

(19) **European Patent Office** ·

**Office européen des brevets**

(11) Publication number: **0 026 100**
**A2**

(12) # EUROPEAN PATENT APPLICATION

(21) Application number: **80303323.2**

(22) Date of filing: **23.09.80**

(51) Int. Cl.³: **E 21 B 17/07**
**F 16 F 1/52, F 16 D 3/12**
**//F16D3/76**

(30) Priority: **24.09.79 CA 336232**

(43) Date of publication of application:
**01.04.81 Bulletin 81/13**

(84) Designated Contracting States:
**AT BE CH DE FR GB IT LI LU NL SE**

(71) Applicant: **DELTA OIL TOOLS LTD**
**P.O. Box 8465 Station F**
**Edmonton Alberta T6H 5H3(CA)**

(72) Inventor: **Walter, Bruno**
**45 College Street**
**Kingston Ontario K7L 4LS(CA)**

(74) Representative: **Jackson, Derek Charles**
**Haseltine Lake & Co. Hazlitt House, 28 Southampton**
**Buildings Chancery Lane**
**London WC2A 1AT(GB)**

(54) **Shock absorbing apparatus and drill string using such apparatus.**

(57) A shock absorbing apparatus for connection in a drilling string and capable of transmitting the axial drilling work loads and the torsional forces required for rotating a drill bit at the bottom of the drill string include an elongated housing (12) and a mandrel (14) extending longitudinally within the housing. The housing interior and the mandrel have mutually co-operating formations (26, 24) thereon for transmitting the axial and torsional forces. The mutually co-operating formations have substantial clearance spaces (28, 30) therebetween such that the mandrel has a substantial degree of axial and torsional freedom relative to said housing. A matrix of resiliently deformable material (32) is disposed in the clearance spaces between the mutually co-operating formations so that under the influence of shock loadings on the drill string, the matrix of material deforms and flows to take up and reduce the shocks and vibrations transmitted between the mandrel and the housing.

./...

~Fig~2A~

~Fig~2B~

-1-

SHOCK ABSORBING APPARATUS FOR DRILL STRING

This invention relates to improvements in shock absorbing apparatus for connection in a drilling string.

In rotary drilling it is common practice to employ a drill collar section above the bit with the drill pipe extending upwardly from the drill collar section. The drill collar section applies the necessary weight directly above the bit such that the compressive force necessary on the bit is exerted by the drill collar section while the pipe remains in tension. The entire string and the bit are rotated by a drive works at the surface to cause the bit cones to pulverize the rock and other earthen formations. Drilling fluid is pumped down the drill string and out of the orifices in the bit and thence returns to the surface via the well annulus to cool the bit and to carry the cuttings to the surface.

The action of the rotary drill bit as it advances through rock and the like subjects the drilling string to shocks and vibrations. These shocks and vibrations tend to result in shorter tooth and bearing life, and tend to cause fatigue failure of the drill pipe thread, particularly at the threaded connection between the relatively flexible drill pipe and the rigid drill collar. Shocks transmitted

-2-

through the drill string to the surface drive equipment tend to cause additional wear and tear of the latter.

In an effort to reduce excessive shocks and vibration, a number of shock absorbing devices have been previously developed. However, the great majority of vibration dampers and absorbers now employed tend to deal with only one part of the problem and therefore do not, in most cases, provide an adequate solution. In order to design a satisfactory shock absorbing system it is necessary to first review the manner in which these shocks and vibrations arise.

The primary source of shocks from the bottom of the drill string arises as a result of the mode of rock and bit interaction. Depending on the drilling depth, which directly determines the hydrostatic pressure, and the type of the rock, the rock behaves as either a brittle, transitional, or ductile material. It has been determined that at relatively small depths (5000-7000 ft.) when the rock is brittle, rock removal is achieved primarily by crushing or percussive action. the forces acting on the bit may be broken into an axial vector representing the axial shocks and a radial vector representing the torsional shocks. During the drilling operation in brittle rock, prior to rock fracture, a build-up of resistance occurs, and, after the fracture, the accumulated energy stored in the relatively flexible drill string is released and shock occurs. When drilling at great depth in rock which is transitional or ductile, a scraping (actual cutting) action occurs and since there is little or no fracturing of the rock, shocks from this source do not occur. However, due to the fact that greater torques are required during deep drilling even small disturbances from other sources produce equally significant shocks. As a result of measurements taken directly at the bit, it has been shown that axial and torsional shocks occur at substantially the same time and that the torsional aspect tends to be more pronounced.

The drill string itself is subjected to large frictional forces caused by deviation in the hole and various formations and conditions in the hole. Since the drill pipe, as with any long shaft under torsional load, is able to deflect angularly, it is able to accumulate large amounts of energy. The angular displacement in the drill string tends to accumulate because continuous drag keeps the string under constant stress and shocks producing additional angular displacement tend to remain stored in the drill string with this stored angular twisting of the drill string eventually tending to slightly shorten the drill string. When the stored energy is released in the form of "unwinding" of the drill string, axial shock occurs. The connection between the drill pipe and the drill collar is particularly subjected to extreme local stress since all or most of the released energy is absorbed at this point. The longer the drill string, the more sensitive the string becomes to torsional shocks.

In addition to the above sources of shock loadings, it _____

has to be kept in mind that when the long drilling string is prestressed, even forces of smaller magnitude at certain frequencies can induce oscillations. A few of these sources of oscillations include the rotary drive motor which induces drive torque variations, the hydraulic pump which induces pressure oscillation between the mud pump and hydrostatic mud column due to the water hammer effect, and the roller bit cones which also tend to induce oscillation. With so many sources of oscillation, special harmonics can develop which tend to multiply the already existing problems.

Existing vibration absorbers or shock tools are usually concerned with absorbing only torsional loads or axial loads. They fail to take into consideration the intimate relationship between torsional and axial loads existing under actual drilling conditions. In many cases the design of the prior art devices is such that at high shock loadings they may lose their capacity to absorb further shock altogether, i.e. the resilient elements provide tend to bottom out and become ineffective. The bulk of the prior art arrangements presently in operation are limited in the load they can carry up to about 100,000 pounds. Due to their design, if one was to attempt to increase their load carrying ability, one would be obliged to increase the cross sectional area of the tool; however, this is usually impossible due to the limitations imposed by the well hole diameter and the need for an internal passage in the tool to allow for the flow of drilling mud. A further problem with most prior art designs is that they include numerous relatively movable parts which can be severely damaged in the event that drilling mud enters into the tool interior. Costly seal arrangements are needed and these give rise to substantial maintenance problems.

Summary of the Invention

It is accordingly an object of the invention to provide an improved shock absorbing apparatus having an ability to accommodate shock loadings of very high magnitude. It is a further object to provide apparatus of this nature which has the ability to accommodate both torsional and axial shock loads and which apparatus furthermore has the ability to separate the axial and torsional shock loadings and to dampen them separately.

It is a further object of the invention to provide a very simple and yet effective shock absorbing apparatus having a relatively small number of parts and which can be manufactured at a relatively low cost.

It is a further object to provide a shock absorbing apparatus having a design such that the longer the tool is, the more loading it can accommodate.

It is a further object to provide apparatus of the type under consideration wherein there is no danger of drilling mud entering into and destroying the internal components thus reducing greatly the amount of servicing required.

Accordingly, the invention in one aspect provides shock absorbing apparatus for connection in a drilling string and capable of transmitting the axial drilling work loads and the torsional forces required for rotating a drill bit at the bottom of the drill string. The apparatus includes an elongated housing and a mandrel extending longitudinally within the housing. The housing interior and the mandrel have mutually co-operating formations thereon for transmitting the axial and torsional forces. The mutually co-operating formations have substantial clearance spaces therebetween such that the mandrel has a substantial degree of axial and torsional freedom relative to said housing. A matrix of resiliently deformable material is disposed in the clearance spaces between the mutually co-operating formations so that under the influence of shock loadings on the drill string, the matrix of material deforms and flows to take up and reduce the shocks and vibrations transmitted between the mandrel and the housing.

Preferably, the mutually co-operating formations comprise helical screw-thread-like formations, the formations on the mandrel being axially spaced in both directions from the formations on the housing to form the clearance spaces within which is located the matrix of resiliently deformable material.

The helical formations may comprise a continuous formation on the mandrel and a continuous formation on the housing interior.

Preferably the pitch dimensions of the helical formations are equal to one another and are constant throughout the length of said formations.

Each said helical formation includes a root portion and a crest portion, the crest portion of one of the formations being, in the preferred embodiments, radially spaced from the root portion of the other formation to provide a passage for the flow of resiliently deformable material which is in one of the clearance spaces and under the influence of pressure forces to the next adjacent clearance space in communication therewith.

A pair of shock absorbing devices may be serially arranged in a drill string, one having a matrix material of harder material (i.e. higher spring constant) than the other thereby to reduce the possibility of resonant vibrations occurring and to extend the useful range of operation of the device from light to very heavy loadings.

The matrix of resiliently deformable material preferably comprises rubber, e.g. polyurethane rubber.

In a typical embodiment the screw-thread-like formations may have a helix angle relative to a plane normal to the axial direction which is relatively large.  This form of shock absorber apparatus is adapted for placement in an intermediate portion of the drill string.

Alternatively, the formations may have a helix angle which is relatively small, such shock absorbing apparatus being adapted for placement toward the bottom end of the drill string.

The mutually cooperating formations are preferably arranged such that, in the event of complete failure of the matrix of resiliently deformable material, the formations are capable of coming into contact with one another.  This enables torsional and axial forces to be transmitted through the formations to enable a drill bit at the bottom of a drill string in which the shock absorbing apparatus is connected to be rotated to allow further drilling to be effected, or alternatively, to be lifted out of the well.

Brief Description of the Views of Drawings

In drawings which illustrate preferred embodiments of the invention:

Fig. 1 is a graph illustrating the relationship between bit weight, torque, and angular velocity;

Figs. 2a and 2b are a longitudinal section view of one embodiment according to the invention;

Fig. 3 is a longitudinal section of a portion of the mandrel illustrating the helical formations;

Fig. 4 is a portion of a longitudinal section of the housing further illustrating the configuration of the helical formations;

Figs. 5a and 5b comprise a half section view taken longitudinally of a further embodiment of apparatus according to the invention;

Fig. 6 is a view of a portion of the mandrel of the embodiment shown in Figs. 5a and 5b;

Fig. 7 is a longitudinal section of a portion of the housing of the embodiment of Figs. 5a and 5b and further illustrating the nature of the helical formations;

Figs. 8 through 14 are diagrammatic views of portions of the apparatus illustrating the mode of operation thereof under various conditions.

Detailed Description of the Preferred Embodiments

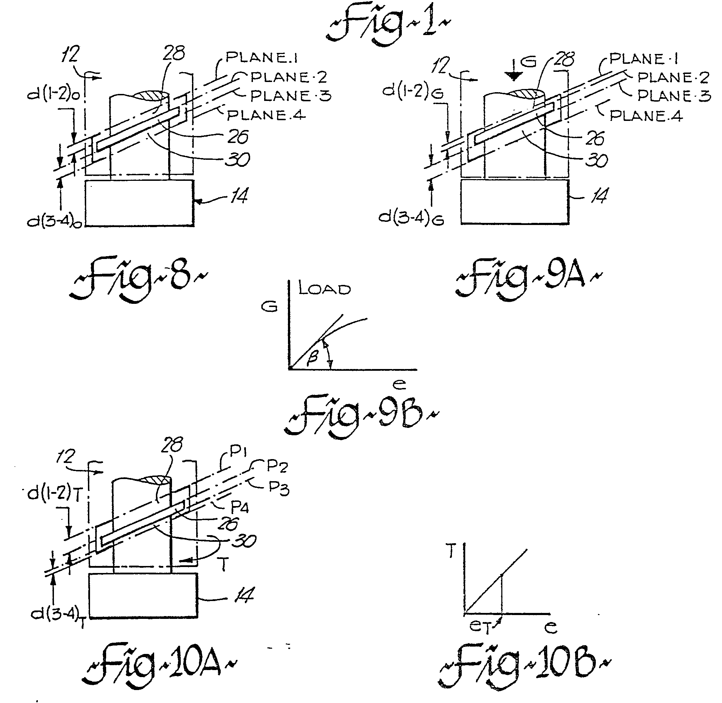

With reference firstly to Fig. 1, these graphs require little explanation since they clearly display the relationship between torque, axial load and angular velocity (RPM) as actually recorded at a drill bit. It will be seen that the torque increases and decreases are in substantial correspondence with axial load increases and decreases respectively and that the angular velocity of the bit, with the exception of a few irregularities, varies substantially inversely in relation to the torque.

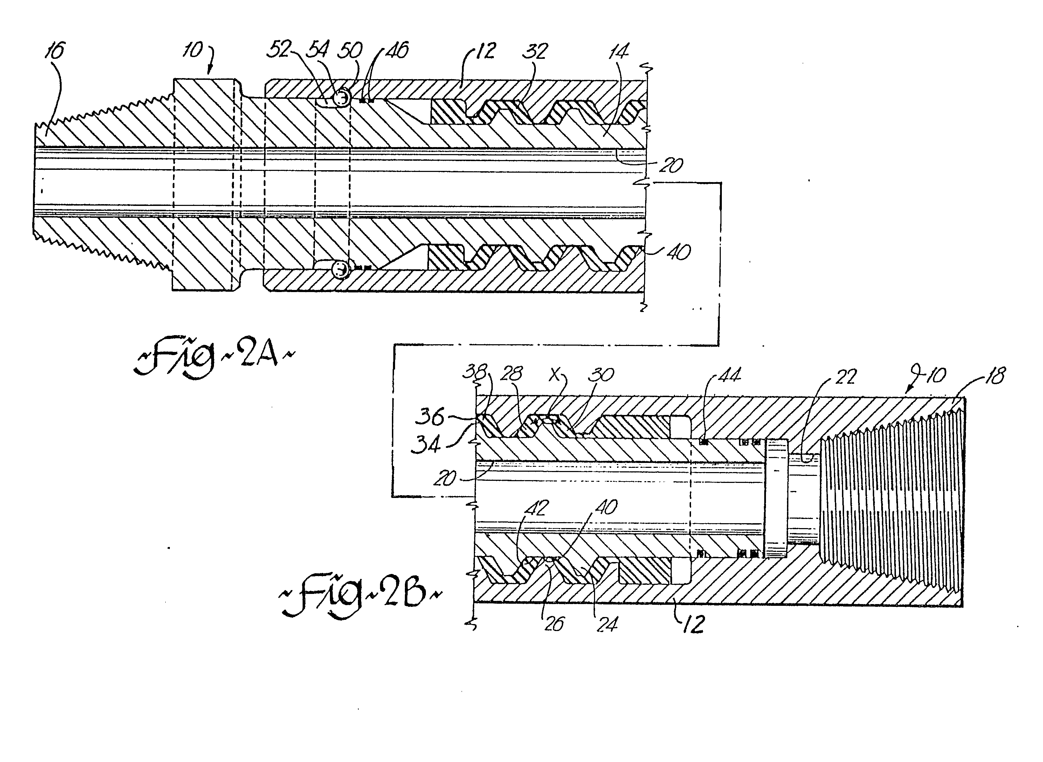

Turning now to Figs. 2a, 2b, 3 and 4, there is illustrated a shock absorbing apparatus 10 according to one embodiment of the invention. The apparatus includes an elongated housing 12 and a mandrel 14 extending longitudinally within the housing. The upper end of the mandrel 14 is provided with a conventional threaded pin portion 16 to allow same to be screwed into the end of a drill pipe section, while the lower end of the housing is provided with a conventional internally threaded box portion 18 for connection either to an upper end portion of a further drill pipe section or, alternatively, to a conventional drill bit.

The interior of the mandrel 14 is provided with a longitudinal bore 20 extending axially therethrough and cooperating with a bore 22 formed adjacent the lower portion of the housing thereby to allow for the passage therethrough of drilling mud.

It will be seen that the intermediate portion of the mandrel is provided with a helical screw-thread-like formation 24 which is disposed in cooperation with a similar helical screw-thread-like formation 26 formed on the interior wall of the intermediate section of the housing 12. It will be noted that there are substantial clearance spaces 28 and 30 between the helical formations 24 and 26 thus giving mandrel 14 a substantial degree of axial and torsional freedom relative to the housing 12. A matrix of resiliently deformable material 32 is disposed in the clearance spaces 28 and 30 between the mutually cooperating formations 24 and 26. It will be seen hereafter that under the influence of shock loadings on the drill string, this matrix 32 of material deforms and flows to take up and reduce the magnitude of shock loadings transmitted between the mandrel and the housing and to dampen out the accompanying vibrations.

As seen from the drawings, the helical formations 24 and 26 are each of a continuous nature with the pitch of helical formation 24 being equal to the pitch of the helical formation 26, such pitch dimensions being constant throughout the length of the formations.

It will be particularly noted that the crest portions 34 of formations 24 are radially spaced from the root portions 36 of formations 26 thereby to provide passages 38 which allow for the flow of the resiliently deformable material which is in one of the clearance spaces 28, 30, and under the influence of stresses, to flow to the next adjacent clearance space in communication therewith. The direction of the flow is given by the arrow X and it will be appreciated that the direction of the flow depends upon the direction of the axial and torsional shocks supplied to the apparatus 10.

The matrix material 32 is preferably made from polyurethane rubber. Since such polyurethane rubber is substantially incompressible, it is necessary that the above noted flow passages be provided thereby to allow the mandrel 14 to move both axially and torsionally relative to housing 12. It is furthermore noted that the polyurethane rubber matrix preferably has a hardness from about 83 to about 94 durometer. When drilling at relative great depths under heavy loadings, rubber having a hardness of about 94 durometer or slightly greater is preferred while under lighter loadings a lesser hardness in the order of 83 durometer is desirable thereby to provide the tool with the desired spring constant.

It will also be noted that the crest portions 40 of the formations 26 on the housing are in relatively close sliding relationship to the root portions 42 of the formations on the mandrel 14. The reason for this is to stabilize the mandrel 14 and to reduce stresses therein which might tend to buckle the mandrel 14 under the high axial loads commonly encountered.

The lower end of the mandrel 14 is provided with several spaced apart O-rings 44 which inhibit the entry of mud or other undesirable materials into the space between the mandrel and the housing while the upper end of the mandrel includes similar O-rings for the same purpose. The main seal, however, is the rubber matrix that prevents flow of the mud through the helical formations.

The inner surface of housing 12 is provided adjacent its upper end with a shallow annular groove 50 which cooperates with an annular groove 52 provided in the mandrel 14. The groove 52 is of substantial extent in the axial direction thereby to allow for substantial axial movement of the mandrel relative to the housing. Interposed in the space defined by grooves 50 and 52 are a number of steel balls 54 which, under ordinary circumstances, permit the required degree of torsional and axial freedom between the mandrel and housing. However, under extreme circumstances, such as owing to complete failure of the matrix material 32, these steel balls 54 interact with the grooves 50, 52 to prevent the mandrel 14 from being screwed out of the housing 12. The balls 54 are introduced into the space defined by grooves 50, 52 by means of an inlet hole disposed radially relative to the exterior of housing 12 and closed by means of a threaded plug (not shown).

The following Table gives the relevant dimensions for a typical shock absorbing apparatus constructed in accordance with the embodiment shown in Figs. 2-4. It is to be understood that the dimensions given in Table 1 are typical dimensions only and that the invention is in no way to be restricted to the particular dimensional quantities given.

TABLE 1 (Figs. 2-4)

| Item | Description | Dimension |
|------|-------------|-----------|
| A | Thread pitch (single start) | 2.25 in. |
| B | Crest Diameter (mandrel) | 5.0 in. |
| C | Root Diameter (mandrel) | 3.87 in. |
| D | Length of Threaded Section | 9.65 in. |
| E | Axial length of thread crest | 0.25 in. |
| F | Included Angle at crest | 60° |
| G | Root Diameter (housing) | 5.48 in. |
| H | Crest Diameter (housing) | 3.875 in. |

Note: Matrix Material -polyurethane rubber - hardness about 83-94 Durometer.

A second embodiment of the invention is illustrated in Figs. 5a, 5b, 6 and 7. Essentially this embodiment of the invention is of the same general construction as the embodiment of Figs. 2-4 and accordingly a detailed description of this second embodiment will not be required. Like reference numerals have been applied to those portions of the second embodiment which correspond generally to those of the first embodiment described above except that the suffix "a" has been added to each of the reference numerals.

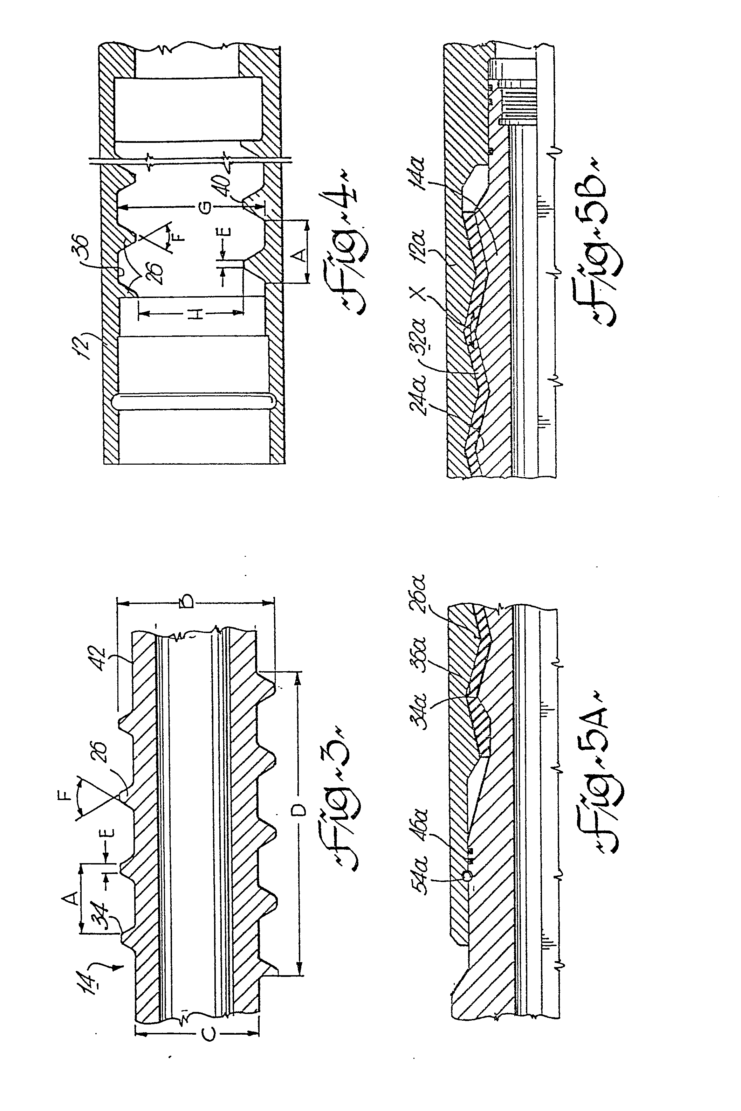

The following table gives typical dimensions for the various helical formations etc. in the embodiment of Figs. 5-7. As previously noted, these dimensions are given only to assist those skilled in the art and the invention is to be in no way limited thereby.

## TABLE II (Figs. 5-7)

| Item | Description | Dimension |
|------|-------------|-----------|
| J | Thread pitch (single start) | 5.50 ins. |
| K | Crest Diameter (mandrel) | 5.62 ins. |
| L | Root Diameter (mandrel) | 4.50 ins. |
| M | Length of threaded section | 13.65 ins. |
| N | Root Diameter (housing) | 6.45 ins. |
| P | Crest Diameter (housing) | 5.37 ins. |

Note: Matrix Material as in Table 1.

It will be noted that the pitch dimension of the embodiment of Figs. 5-7 is much greater than the corresponding pitch dimension for the embodiment of Figs. 2-5 with the result being that the helix angle of the second embodiment is correspondingly greater. The first embodiment shown in Figs. 2-4 is particularly well suited for use in a position in a drill string just above the drill bit while the embodiment of Figs. 5-7 is adapted to be positioned in an intermediate position in the drill string with there being a relatively long length of drill string below the shock absorbing apparatus and a correspondingly large mass. With the first embodiment having a relatively shallow helix angle for the screw-thread-like formations, such tool provides greater sensitivity and good response to torsional shocks. However, if this embodiment is used in an intermediate section of the drill string, a large torsional shock might induce a very high axial upward acceleration, in the event that rotation of the bit is retarded, sufficient to cause breaking of the neck of the mandrel. With the relatively steep helix angle for the embodiment of Figs. 5-7, extremely high upward axial accelerations are not encountered in the event of retardation of bit rotation and hence breakage is not likely to be encountered even when there is a very large mass of drill string positioned below the shock absorbing apparatus.

With both of the embodiments described above it will be appreciated that the overall apparatus is relatively simple and has very few operating parts. After the mandrel and housing have been assembled together, the polyurethane rubber is injected into the clearance spaces 28, 30 existing between the screw-thread-like formations via a suitable hole provided in the housing (not shown) which hole is thereafter closed by means of
a suitable plug.  The liquid polyurethane rubber is then allowed
to cure and in so doing it forms a relatively strong bond with
the surfaces of the mandrel and housing with which it comes into
contact.  A suitable priming agent, well known to those skilled
in the art, may be applied to the relevant mandrel and housing
surfaces prior to the assembly step.  Furthermore, the relevant
surfaces of the formations of the mandrel and housing may be
treated as by blasting with a suitable agent thereby to roughen
the surfaces slightly thereby to provide for better bond between
the polyurethane rubber and the screw-thread formations.  However, it should be appreciated that the operation of the tool is
not greatly dependent upon the strength of the bond between the
polyurethane rubber and the surfaces in question.  The apparatus
will continue to operate effectively even though the bond
between the formation surfaces and the rubber is broken.  It
should also be realized that in the event of a failure of the
rubber, during the course of operations, the helical formations
24 and 26 merely come into close association with one another
thus allowing axial and torsional forces to be transmitted
between the mandrel and housing thus permitting further drilling
to be effected or, alternatively, to permit the drill bit to be
lifted out of the well.  Furthermore, in the event of failure
of the rubber matrix material, it is a relatively simple matter
to burn the old rubber material out of the shock absorber
following which the apparatus is dismantled and cleaned and the
device then reassembled and fresh rubber injected.

It may in certain circumstances be advisable to utilize
two shock absorbing devices in tandem.  For example, two shock
absorbing devices in accordances with the embodiment of Figs.
2-4 could be utilized, one being disposed directly above the
other and the only difference between the two devices being that
one incorporates a relatively soft polyurethane rubber as the
matrix, for example, in the order of 83 durometer, while the
other incorporates polyurethane rubber which is considerably
harder, e.g. in the order of 94 durometer.  This arrangement is
very useful in reducing or eliminating resonant vibrations by
virtue of the difference in the "spring constants" of the two devices. Furthermore, one shock absorber will take care of the smaller shocks and vibrations by virtue of its relatively soft matrix, while the other shock absorber will, in the event of heavy shock loadings sufficient to cause the first device to "bottom out", act to effectively absorb and dampen the heavier shock loadings and associated vibrations. The same tandem arrangement can be utilized for the embodiment of Figs. 5-7 with such embodiment being utilized at an intermediate point in the drill string as described previously.

Description of Operation

A brief evaluation of certain conditions encountered while drilling for oil and gas which establishes the need for some form of axial and torsional shock absorber has been described previously. The purpose of the following description is to describe the function and operation of the tool. For purposes of simplicity of explanation, the problem is not studied in mathematical detail but only the most obvious and relevant facts are discussed here. It is also noted that the invention is not to be bound by any particular theory of operation.

(a) General Layout Under No-Load Conditions

With reference to Fig. 8 there is illustrated in diagrammatic fashion a section of the shock absorbing apparatus with the housing 12 being shown in dashed lines and a portion of the mandrel 14 being shown in full lines. Only one section of the active helical formation 26 is shown and the clearance spaces 28 and 30 on opposite thereof are bounded by dashed lines. These cavities of course are considered as being filled with polyurethane rubber (not shown) and for purposes of this analysis no bond between the rubber and the metal is assumed (since such bond is unreliable in any event) and therefore the following analysis will not take into account any actual tensile forces which may be in existence. Fig. 8 illustrates planes 1, 2, 3 and 4 with the distance between planes 1 and 2 under zero loading conditions being given by the designation $d(1-2)_0$ and the distance between planes 3 and 4 under zero load being given by $d(3-4)_0$. In the analysis which follows it will be assumed that the helical formation 26 is in the form of a right hand thread and that any axial loadings are applied to the housing 12 with any torque loadings being applied thereto in the right hand direction.

**(b) Axial Load Only Applied to Housing**

With reference to Fig. 9a it will be seen that an axial load G has been applied to housing 12. The rubber in clearance space 28 is under compression so that some of it has flowed around into clearance space 30. The rubber in clearance space 30 will in fact be under a degree of tension but, as noted above, this need not be taken into consideration for purposes of this analysis. With reference to Fig. 9b which is a stress strain diagram, there is shown a curve representing the deformation e of the polyurethane rubber under the influence of load G. The angle $\beta$ representing the slope angle of the initial portion of the curve is equal to the effective spring constant C of the rubber material. With reference to Fig. 9a it will be seen that the following relationships hold:

$$d(1-2)_G = d(1-2)_0 - e_G$$
$$d(3-4)_G = d(1-2)_0 + e_G$$

Therefore, it will be seen that when axial load G only is applied, the space 28 between plane 1-2 is compressed and the rubber flows (because it is basically incompressible) into the enlarged space 30 between planes 3-4. The rubber in the cavity 1-2 is under stress that is a function of the rubber constant C, the deformation, and the axial load G. Therefore, for each axial load G there corresponds a rubber deformation $e_G$ and the associated $d(1-2)_G$.

Equilibrium is reached when the stress $e_G$ in the rubber multiplied by the axially projected area of thread formation 26 in contact with the rubber equals the axial load G.

**(c) Torsional Load Applied Only**

With reference to Figs. 10a and 10b, a torsional force T is applied to housing 12. Fig. 10b is a stress strain diagram illustrating the deformation $e_T$ of rubber under the influence of the torsional force T.

When only a torsional load T is applied, the rubber in clearance space 30 between planes 3-4 is compressed and the rubber accordingly flows to the clearance space 28 between planes 1 and 2. Thus, the rubber between planes 3-4 is under stress which is a function of the rubber constant C, applied torque T and deformation $e_T$. Equilibrium is reached when the stress in the rubber multiplied by the area of the helical formation in contact with the rubber in a radial plane is equivalent to the torque producing force T and the following relationships hold:

$$d(1-2)_T = d(1-2)_0 + e_T$$

$$d(3-4)_T = d(3-4)_0 - e_T$$

(d) The Relation Between Axial Load and Torque

When rotating the drill bit, the torque required to drive the bit is a function of the axial load. It follows that when increasing the axial load, the torque required to drive the drill bit should be increased as well.

Since the torque is supplied by way of a long and relatively flexible drill string that is partially already stressed with angular displacement already being present, in order to deliver an increase of the torque to the drill bit an additional angular deformation of the drill string must take place. If this happens quickly, axial shock produces torsional shock.

As was described previously, when the drill string accumulates enough energy due to the twisting of the long string and when the drill bit is for some reason momentarily off the hole bottom, the hole drill string unwinds and extends and an axial shock is produced. It is quite apparent that axial shock produces torsional shock and torsional shock produces axial shock. It is also apparent that the accumulated energy due to the torsional shocks, when released, produces a related "accumulated" axial shock.

It will become apparent from the following description that the two forms of shock are separated and dampened separately and that the accumulation of the torque in the drill string is greatly reduced.

(e) Torsional and Axial Load Applied Under Normal Drilling Conditions

With reference to Fig. 11, $d(1-2)_{GT}$ and $d(3-4)_{GT}$ are established and maintained and are a function of G(T is a function of G), the rubber constant C and helix angle $\alpha$.

(f) Axial Shock Under Drilling Conditions

First Stage

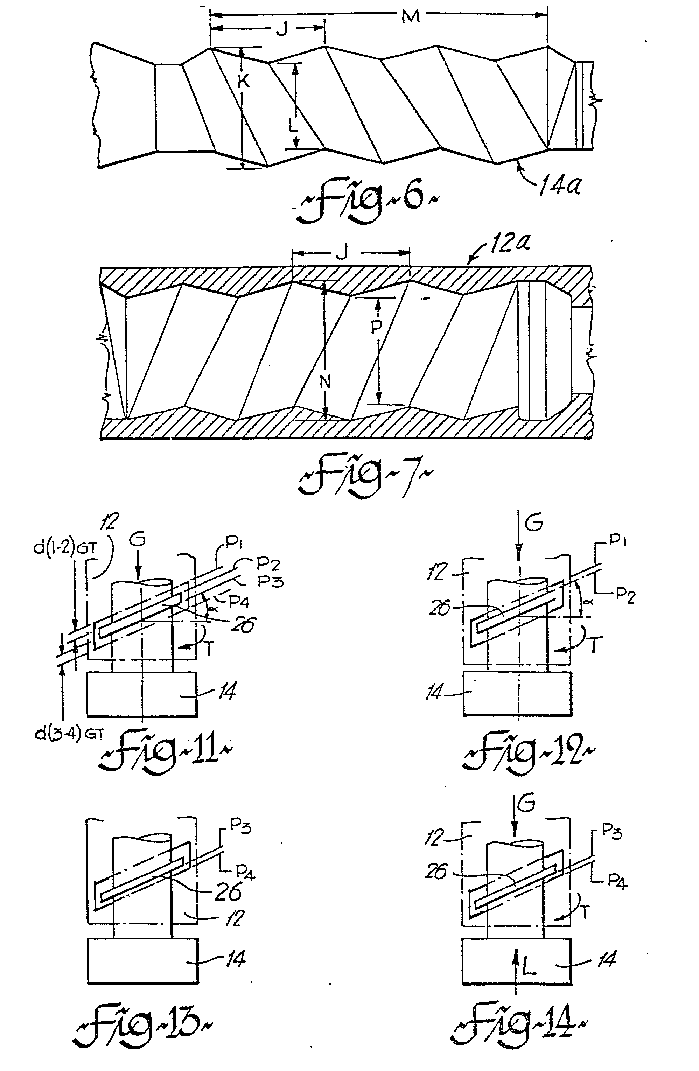

With reference to Fig. 12 it should be noted that torque T is present as well as the basic axial load G. Under the influence of the axial shock the housing 12 accelerates (due to the added torque by transforming axial shock into torsional shock due to the effect of the helix angle $\alpha$) above its normal angular velocity. At the same time mandrel 14 decelerates from its normal angular velocity after the initial dampening due to the flow of rubber from between planes 1 and 2 into the region between planes 3 and 4. At the same time the internal stress in the rubber between planes 1 and 2 increases; a torsional force (which is related to the angle $\alpha$ or a radially projected area of the helical formation 26 in contact with the pressurized rubber) acts on housing 12 and this force creates the extra torque needed at the bit due to the increased axial (shock) loading.

Therefore, there is no need to deliver extra torque through the drill string and there is no need to produce additional angular displacement of the long drill string and this means that no accumulation of energy due to twisting of the drill string occurs. Therefore, it can be said that the energy resulting from the axial shock is transformed into energy acting in the required torsional direction when it is needed to supply the increased demand for torque at the bit resulting from the increased axial load.

Second Stage (end of cycle)

With reference to Fig. 13, following acceleration of housing 12, the housing 12 acts on mandrel 14 and the rubber between planes 3 and 4 is compressed. The housing 12 slows down into the normal angular velocity while mandrel 14 accelerates into the normal angular velocity.

In the slowing down of housing 12 and the accelerating of mandrel 14 into the normal angular velocity, the axial shock which was transformed into torsional movement of housing 12 is finally torsionally transmitted to mandrel 14 and the drill bit. When the velocity of housing 12 and the velocity of mandrel 14 are equal, the process of accommodating the axial shock is concluded.

From the above description it is seen that the axial shock has been transformed into the additional torque needed, (additional torque being required due to the increased axial load resulting from the axial shock) and that no accumulation of angular displacement in the long drill string has occurred.

(g) Torsional Shock Under Drilling Conditions
    (Axial Load and Basic Torque Present)

With reference to Fig. 14 let it be assumed that a torsional shock is applied to the housing 12. By virtue of the action of helical formation 26, the rubber between planes 3 and 4 is compressed and put under stress and this stress multiplied by the area of the helical formation in contact with the pressurized rubber in an axial plane produces a lifting force L. As this action is occurring, mandrel 14 decelerates from its normal angular velocity. This lifting force L lifts mandrel 14 and the attached drill bit upwardly. It is quite evident that this reduces the drag of the drill bit thus reducing the torque required. This action eliminates the torsional shock at its very inception.

General Comments

It will of course be realized that no mechanical device is one hundred percent efficient and therefore the shock absorbing apparatus described above cannot remove or absorb all of the shocks and vibrations from the system. However, it has been shown that the apparatus described above reduces a major portion of the problem. It will also be apparent from the above discussion that by increasing the number of helical formations 26 that the shock transforming and absorbing capacity of the tool can be increased to the desired degree.

"CLAIMS"

1. Shock Absorbing apparatus for connection in a drilling string and capable of transmitting the axial drilling work loads and the torsional forces required for rotating a drill bit at the bottom of the drill string, the apparatus comprising:

(a)  an elongated housing;

(b)  a mandrel extending longitudinally within the housing;

(c)  the housing interior and the mandrel having mutually co-operating formations thereon for transmitting the axial and torsional forces;

(d)  said mutually co-operating formations having substantial clearance spaces therebetween such that the mandrel has a substantial degree of axial and torsional freedom relative to said housing;

(e)  and a matrix of resiliently deformable material disposed in the clearance spaces between the mutually co-operating formations so that under the influence of shock loadings on the drill string the matrix of material deforms and flows to take up and reduce the shock loading transmitted between the mandrel and the housing.

2. The shock absorbing apparatus of claim 1 wherein said mutually co-operating formations comprise helical screw-thread-like formations, the formations on the mandrel being axially spaced in both directions from the formations on the housing to form said clearance spaces within which is located the matrix of resiliently deformable material.

3. The shock absorbing apparatus of claim 2 wherein the helical formations comprise a continuous formation on the mandrel and a continuous formation on the housing interior.

4. The shock absorbing apparatus of claim 3 wherein the pitch dimensions of the helical formations are equal to one another and are constant throughout the length of said formations.

5. The apparatus of any one of claims 2, 3 or 4 wherein each said helical formation includes a root portion and a crest portion, the crest portion of one of the formations being radially spaced from the root portion of the other formation to provide a passage for the flow of resiliently deformable material which is in one of the clearance spaces and under the influence of pressure forces to the next adjacent clearance space in communication therewith.

6. In a drill string, a pair of shock absorbing apparatuses as recited in any one of claims 1-3, one such apparatus having a matrix material of harder material and a higher effective spring constant than the other thereby to reduce the possibility of resonant vibrations occurring and to enable a wide range of shocks to be absorbed.

7. The shock absorbing apparatus of any one of claims 1, 2 or 3 wherein the matrix of resiliently deformable material comprises rubber.

8. The shock absorbing apparatus of any one of claims 2, 3 or 4 wherein the screw thread-like formations have a helix angle relative to a plane normal to the axial direction which is relatively large, the shock absorbing apparatus being adapted for placement in an intermediate portion of the drill string.

9. The shock absorbing apparatus of any one of claims 2, 3 or 4 wherein the screw thread-like formations have a helix angle which is relatively small, such shock absorbing apparatus being adapted for placement toward the bottom end of the drill string.

10. The shock absorbing apparatus of any one of claims 1, 2 or 3 in combination with a drill string, an end portion of the mandrel projecting outwardly of one end of the housing and being connected to a portion of the drill string, and the opposite end of the housing being connected either to a further portion of the drill string or to a drill bit.

11. The shock absorbing apparatus of any one of claims 1, 2 or 3 wherein the mutually cooperating formations are arranged such that, in the event of complete failure of the matrix of resiliently deformable material, the said formations are capable of coming into contact with one another thereby to enable torsional and axial forces to be transmitted therethrough to enable a drill bit at the bottom of a drill string in which the shock absorbing apparatus is connected either to be rotated to allow further drilling to be effected or to be lifted out of the well.

0026100

*Fig-1-*

*Fig-8-*

*Fig-9A-*

*Fig-9B-*

*Fig-10A-*

*Fig-10B-*

Fig. 2A

Fig. 2B

Fig. 4

Fig. 5b

Fig. 3

Fig. 5A

$Fig-6$

$Fig-7$

$Fig-11$

$Fig-12$

$Fig-13$

$Fig-14$